# FASCICULE DE BREVET EUROPEEN

(11) **EP 0 348 930 B1**
(45) Date de publication et mention de la délivrance du brevet: **03.03.1993**
(21) Numéro de dépôt: 89111754.1
(22) Date de dépôt: 28.06.1989
(51) Int. Cl.: B61D 17/02, B61D 17/08, B62D 25/12

(54) **Dispositif d'ouverture et de fermeture d'une jupe de bas de caisse de véhicule**
Vorrichtung zum Öffnen und Schliessen einer unteren Schürze eines Wagenkastens
Device for opening and closing a lower skirt of a vehicle body

(30) Priorité: 01.07.1988 FR 8808933
(43) Date de publication de la demande: 03.01.1990
(73) Titulaire: GEC ALSTHOM SA, 75116 Paris (FR)
(72) Inventeur: Vignaud, Jean-Claude, F-17137 Nieul-sur-Mer (FR)
(74) Mandataire: Weinmiller, Jürgen

(56) Documents cités:
- EP-A- 0 050 200
- CA-A- 906 538
- FR-A- 2 225 321

## Description

La présente invention concerne un dispositif d'ouverture et de fermeture d'une jupe de bas de caisse de véhicule pour accès à au moins un compartiment d'entreposage de matériel, par rotation autour d'un premier axe fixe disposé à proximité du bord supérieur de la jupe en position abaissée de fermeture. Les compartiments auxquels donnent accès ces jupes peuvent servir à l'entreposage d'outils, de bagages légers ou d'appareillage.

La demanderesse a déjà fabriqué dans des trains à grande vitesse des jupes mobiles de protection de compartiments d'entreposage d'outils munies d'un axe d'articulation à leur extrémité inférieure et d'un verrou de blocage sur la paroi de la caisse du véhicule, et pivotant pour leur ouverture autour de l'articulation jusqu'à une position horizontale, où elles sont maintenues par un bras de retenue. Ces jupes présentent un encombrement latéral notable en position ouverte, et l'accessibilité de la partie inférieure des compartiments n'est pas très bonne.

Elle a également fabriqué pour des tramways des jupes munies d'un axe d'articulation à leur extrémité supérieure, s'ouvrant par pivotement autour de cet axe et maintenues en position ouverte par un vérin. Ces jupes sont également encombrantes en largeur en position ouverte, et l'accessibilité aux compartiments est gênée par la présence des vérins.

On connaît également, par CA-A-906 538, un autre dispositif d'ouverture et de fermeture d'une jupe de bas de caisse de véhicule.

La présente invention a pour but de procurer un dispositif d'ouverture et de fermeture de telles jupes qui présente un faible débattement latéral à l'ouverture et une très bonne accessibilité aux compartiments cachés par la jupe en position fermée, et qui permette un modulage dans le sens longitudinal indépendant du matériel disposé dans les compartiments, les jupes pouvant être standardisées en longueur et interchangeables.

L'invention a donc pour objet un dispositif d'ouverture et de fermeture d'une jupe de bas de caisse de véhicule pour accès à au moins un compartiment d'entreposage de matériel, par rotation autour d'un premier axe solidaire de la caisse et disposé à proximité du bord supérieur du compartiment, le dispositif comprenant un premier plat articulé à l'une de ses extrémités sur le premier axe et à l'autre sur un deuxième axe solidaire de la jupe, un second plat articulé à l'une de ses extrémités sur un troisième axe solidaire de la caisse et interne au compartiment et à l'autre extrémité sur un quatrième axe solidaire de la partie inférieure de la jupe, une première came solidaire de la jupe et assurant avec un verrou et un téton fixe le maintien de la jupe en position basse fermée, une seconde came formant avec un téton solidaire de la zone médiane du second plat un verrou de maintien de la jupe en position haute ouverte, le dispositif étant caractérisé en ce que le deuxième axe est solidaire de la partie inférieure de la jupe, en ce que le troisième axe est disposé à proximité du bord supérieur du compartiment et en ce que la seconde came est portée par le premier axe.

Au moins un ressort hélicoïdal peut être fixé par l'une de ses extrémités à la zone médiane du premier plat et par son autre extrémité à la zone médiane du second plat.
La seconde came peut être constituée par une courte équerre susceptible de pivoter autour du premier axe et se terminant par une extrémité en forme de crochet. L'équerre peut être rappelée par un ressort auxiliaire relié à un point fixe vers sa position de verrouillage.
Le dispositif peut comporter en outre une butée en matériau élastomère de limitation du basculement du second plat vers la position d'ouverture de la jupe.

Il est décrit ci-après, à titre d'exemples et en référence aux figures du dessin annexé, un dispositif d'ouverture et de fermeture d'une jupe de bas de caisse de véhicule ferroviaire.

La figure 1 représente le dispositif en position fermée, la jupe étant abaissée.

La figure 2 représente le dispositif en position ouverte, la jupe étant relevée.

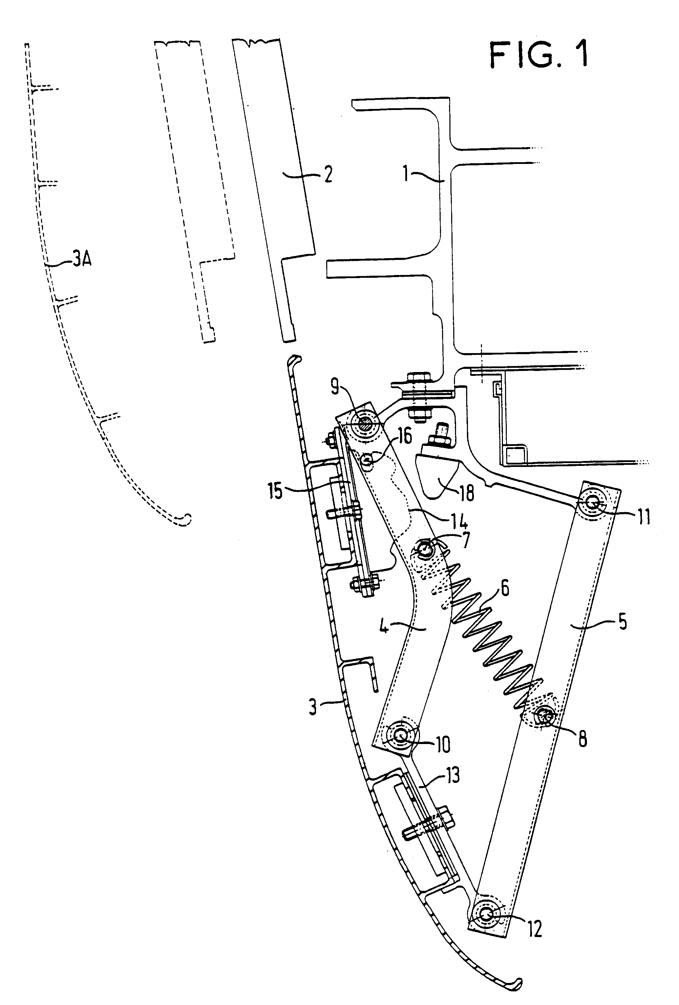

Dans la figure 1, le dispositif est placé dans le bas de la caisse 1 du véhicule, au-dessous d'une porte d'accès 2 à celui-ci. La jupe de bas de caisse 3 est reliée aux deux plats de manoeuvre 4 et 5, reliés par deux ressorts hélicoïdaux dont un seul 6 est visible, faisant ainsi pantographe et facilitant le levage de la jupe. Ce ressort est fixé en 7 dans la partie médiane du plat 4, de forme concave vers l'extérieur, et de section droite en forme de U, et en 8 dans la partie médiane du plat 5, de forme rectiligne et également de section droite en forme de U. Le plat 4 est monté pivotant, d'une part à son extrémité supérieure en position de fermeture autour de l'axe fixe 9, d'autre part à son extrémité inférieure dans cette même position autour de l'axe 10, solidaire de la jupe 3. Le plat 5 est monté pivotant d'une part à son extrémité supérieure en position de fermeture autour de l'axe fixe 11, d'autre part à son extrémité inférieure dans cette même position autour de l'axe 12 solidaire de la jupe 3, au-dessous de l'axe 10, auquel il est relié par une patte 13 boulonnée sur la jupe 3.

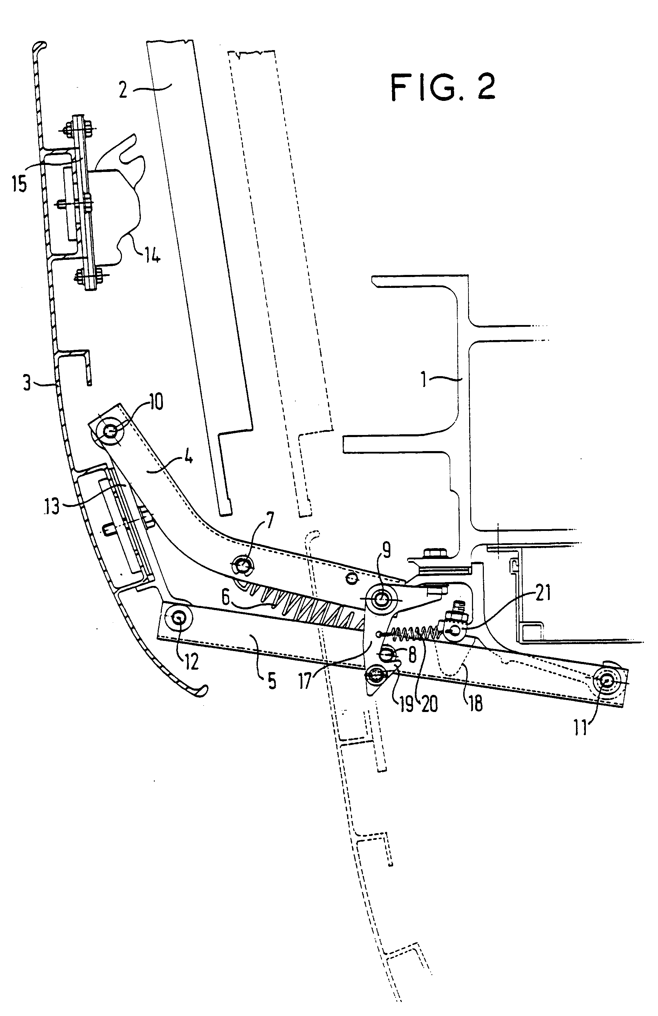

La jupe 3 est maintenue en position basse fermée par pression sur elle assurant le basculement d'un verrou 14 à ressort de blocage, par exemple celui commercialisé sous la désignation "verrou Casi" par la société Carl Sievers fixé à une patte 15 boulonnée dans le haut de la jupe 3 et ainsi bloqué sur le téton fixe 16. Une butée fixe en élastomère 18 est destinée à limiter le déplacement vers le haut du plat 5, comme on le verra ci-après en référence à la figure 2.

La figure 2 représente la dispositif en position d'ouverture pour l'accès aux compartiments d'entreposage d'équipements (non représentés), la jupe étant relevée comme représenté en trait interrompu en 3A sur la figure 1. Le plat 4 a pivoté dans le sens des aiguilles d'une montre autour de l'axe fixe 9, en entraînant vers le haut la jupe 3, après dégagement du verrou 14 du téton 16. L'extrémité inférieure du plat 5 a été entraînée vers le haut par la patte 13, et ce plat a pivoté dans le sens des aiguilles d'une montre autour de l'axe fixe 11. Son axe médian 8 est venu s'engager dans deux cames reliées par un plat de conjugaison dont seule l'une 17 est visible. Celle-ci n'a pas été représentée sur la figure 1, pour plus de clarté. Ces cames ont pivoté autour de l'axe 9 pour venir engager leur extrémité inférieure en forme de crochet 19 sur l'axe 8 et verrouiller ainsi le mécanisme.

Pour éviter qu'à la suite d'un choc les cames telles que 17 ne risquent de se déverrouiller, deux petits ressorts hélicoïdaux, dont seul l'un 20 est visible, fixés d'une part au bras vertical de la came correspondante, d'autre part à un oeillet fixe tel que 21, rappellent les cames en position de fermeture.

La butée 18 en caoutchouc permet le cas échéant de limiter le mouvement du plat 5.

Lorsque l'on veut refermer le dispositif en rabaissant la jupe, une manoeuvre du plat de conjugaison des deux cames telles que 17 assure le déverrouillage. On peut alors par pression sur la jupe faire pivoter le plat 4 autour de l'axe 9. Les plats 4 et 5 reprennent leurs positions initiales de la figure 1 et le verrou 14 vient se bloquer sur le téton fixe 16.

On comprendra qu'en général l'on utilisera pour la manoeuvre d'une jupe plusieurs dispositifs tels que décrits ci-dessus en parallèle, les plats tels que 4 étant reliés de l'un à l'autre par un plat de conjugaison horizontal.

Pour alléger le dispositif, la jupe et les supports des extrémités des plats du pantographe peuvent être en aluminium. Les plats eux-mêmes sont de préférence en acier protégé contre l'oxydation.

L'invention s'applique notamment aux véhicules ferroviaires de transport en commun, mais peut également s'appliquer aux autres véhicules ferroviaires ou aux véhicules routiers.

## Revendications

1. Dispositif d'ouverture et de fermeture d'une jupe (3) de bas de caisse de véhicule pour accès à au moins un compartiment d'entreposage de matériel, par rotation autour d'un premier axe (9) solidaire de la caisse (1) et disposé à proximité du bord supérieur du compartiment, le dispositif comprenant un premier plat (4) articulé à l'une de ses extrémités sur le premier axe et à l'autre sur un deuxième axe (10) solidaire de la jupe, un second plat (5) articulé à l'une de ses extrémités sur un troisième axe (11) solidaire de la caisse et interne au compartiment et à l'autre extrémité sur un quatrième axe (12) solidaire de la partie inférieure de la jupe, une première came (14) solidaire de la jupe et assurant avec un verrou et un téton fixe le maintien de la jupe en position basse fermée, une seconde came (17) formant avec un téton solidaire de la zone médiane du second plat un verrou de maintien de la jupe en position haute ouverte, le dispositif étant caractérisé en ce que le deuxième axe (10) est solidaire de la partie inférieure de la jupe (3), en ce que le troisième axe (11) est disposé à proximité du bord supérieur du compartiment et en ce que la seconde came (17) est portée par le premier axe (9).

2. Dispositif selon la revendication 1, caractérisé en ce qu'au moins un ressort hélicoïdal (6) est fixé par l'une de ses extrémités (7) à la zone médiane du premier plat (4) et par son autre extrémité (8) à la zone médiane du second plat (5).

3. Dispositif selon l'une des revendications 1 ou 2, caractérisé en ce que la seconde came (17) est constituée par une courte équerre susceptible de pivoter autour du premier axe (9) et se terminant par une extrémité en forme de crochet (19).

4. Dispositif selon la revendication 3, caractérisé en ce que l'équerre est rappelée par un ressort auxiliaire (20) relié à un point fixe (21) vers sa position de verrouillage.

5. Dispositif selon l'une quelconque des revendications 1 à 4, caractérisé en ce qu'il comporte en outre une butée en matériau élastomère (18) de limitation du basculement du second plat vers la position d'ouverture de la jupe (3).

## Claims

1. Device for opening and closing a lower skirt (3) of a vehicle body to access at least one equipment stowage compartment by rotation about a first shaft (9) fixed to the body (1) and disposed near the upper edge of the compartment, the device comprising a first link (4) articulated at one end to the first shaft and at the other end to a second shaft (10) fixed to the skirt, a second link (5) articulated at one end to a third shaft (11) fixed to the body inside the compartment and at the other end to a fourth shaft (12) fixed to the lower part of the skirt, a first cam (14) fastened to the skirt and cooperating with a latch and a fixed lug to hold the skirt in the lowered closed position, a second cam (17) forming with a lug fastened to the median area of the second link a latch for holding the skirt in the raised open position, the device being characterised in that the second shaft (10) is attached to the lower part of the skirt (3), in that the third shaft (11) is near the upper edge of the compartment and in that the second cam (17) is carried by the first shaft (9).

2. Device according to claim 1 characterised in that at least one helical spring (6) is fixed at one end (7) to the median area of the first link (4) and at its other end (8) to the median area of the second link (5).

3. Device according to claim 1 or claim 2 characterised in that the second cam (17) comprises a short angle-bracket adapted to pivot about the first shaft (9) and having a hook-shaped end (19).

4. Device according to claim 3 characterised in that the angle-bracket is biased towards its locking position by an auxiliary spring (20) attached to a fixed point (21).

5. Device according to any one of claims 1 to 4 characterised in that it further comprises an elastomer material abutment (18) adapted to limit movement of the second link towards the open position of the skirt 3.

## Patentansprüche

1. Vorrichtung zum Öffnen und Schließen einer unteren Klappe (3) eines Waggons, die Zugang zu mindestens einem Lagerfach für Material durch Drehung um eine erste, mit dem Waggon (1) fest verbundene Achse (9) verschafft, die in der Nähe des oberen Rands des Fachs angeordnet ist, wobei die Vorrichtung ein erstes Flachstück (4), das mit einem seiner Enden an der ersten Achse und mit dem anderen Ende an eine zweite, mit der Klappe fest verbundene Achse (10) angelenkt ist, ein zweites Flachstück (5), das mit einem seiner Enden an einer dritten mit dem Waggon fest verbundenen und im Fach liegenden Achse (11) und mit dem anderen Ende an einer vierten mit dem unteren Teil der Klappe fest verbundenen Achse (12) angelenkt ist, eine erste Nocke (14), die mit der Klappe fest verbunden ist und in Verbindung mit einem Riegel und einem festen Zapfen die Klappe in der geschlossenen unteren Position festhält, eine zweite Nocke (17), die mit einem in der mittleren Zone des zweiten Flachstücks liegenden Zapfen einen Halteriegel für die Klappe in der oberen, offenen Position bildet, dadurch gekennzeichnet, daß die zweite Achse (10) fest am unteren Teil der Klappe (3) befestigt ist, daß die dritte Achse (11) in der Nähe des oberen Rands des Fachs liegt und daß die zweite Nocke (17) von der ersten Achse (9) getragen wird.

2. Vorrichtung nach Anspruch 1, dadurch gekennzeichnet, daß mindestens eine Spiralfeder (6) mit einem ihrer Enden (7) in der mittleren Zone des ersten Flachstücks (4) und mit ihrem anderen Ende (8) in der mittleren Zone des zweiten Flachstücks (5) befestigt ist.

3. Vorrichtung nach einem der Ansprüche 1 und 2, dadurch gekennzeichnet, daß die zweite Nocke (17) aus einem kurzen Winkel besteht, der um die erste Achse (9) schwenken kann und ein hakenförmiges Ende (19) besitzt.

4. Vorrichtung nach Anspruch 3, dadurch gekennzeichnet, daß der Winkel durch eine Hilfsfeder (20), die an einem festen Punkt (21) angekoppelt ist, in die Verschlußstellung gedrückt wird.

5. Vorrichtung nach einem beliebigen der Ansprüche 1 bis 4, dadurch gekennzeichnet, daß sie außerdem einen Anschlag aus Elastomermaterial (18) zur Begrenzung des Schwenkens des zweiten Flachstücks in die Öffnungsstellung der Klappe (3) besitzt.
